# EUROPÄISCHE PATENTSCHRIFT

(11) **EP 1 110 333 B1**
(45) Veröffentlichungstag und Bekanntmachung des Hinweises auf die Patenterteilung: **30.06.2004**
(21) Anmeldenummer: 99955658.2
(22) Anmeldetag: 03.09.1999
(51) Int. Cl.: H04B 7/005, H04B 7/26

(54) **VERFAHREN ZUM BETREIBEN EINES FUNK-KOMMUNIKATIONSSYSTEMS UND DERARTIGES FUNK-KOMMUNIKATIONSSYSTEM**
METHOD FOR OPERATING A RADIO COMMUNICATION SYSTEM AND CORRESPONDING RADIO COMMUNICATION SYSTEM
PROCEDE PERMETTANT DE FAIRE FONCTIONNER UN SYSTEME DE COMMUNICATION RADIO, ET UN TEL SYSTEME DE COMMUNICATION RADIO

(30) Priorität: 04.09.1998 DE 19840507
(43) Veröffentlichungstag der Anmeldung: 27.06.2001
(73) Patentinhaber: SIEMENS AKTIENGESELLSCHAFT, 80333 München (DE)
(72) Erfinder: RITTER, Gerhard, D-86943 Thaining (DE)
(86) Internationale Anmeldenummer: PCT/DE1999/002804
(87) Internationale Veröffentlichungsnummer: WO 2000/014897

(56) Entgegenhaltungen:
- WO-A-98/27677
- US-A- 5 583 870

## Beschreibung

Die Erfindung betrifft ein Verfahren zum Betreiben eines Funk-Kommunikationssystems und ein derartiges Funk-Kommunikationssystem, insbesondere ein Mobilfunksystem mit TDD-Teilnehmerseparierung, wobei die Übertragungseigenschaften der Funkkanäle bestimmt werden.

In Funk-Kommunikationssystemen werden Informationen (beispielsweise Sprache, Bildinformation oder andere Daten) mit Hilfe von elektromagnetischen Wellen über eine Funkschnittstelle zwischen einer Basisstation und einer Mobilstation übertragen. Das Abstrahlen der elektromagnetischen Wellen erfolgt dabei mit Trägerfrequenzen, die in dem für das jeweilige System vorgesehenen Frequenzband liegen. Für zukünftige Mobilfunksysteme mit TD/CDMA-Übertragungsverfahren über die Funkschnittstelle, wie beispielsweise das UMTS (Universal Mobile Telecommunication System) oder andere Systeme der dritten Generation sind Frequenzen im Frequenzband von ca. 2000 MHz vorgesehen.

Für die dritte Mobilfunkgeneration wie das bereits erwähnte UMTS wurde ein breitbandiges TD-CDMA, nämlich ein Vielfachzugriffkonzept basierend auf Zeit-, Frequenz- und Codemultiplex-Konzept, als Übertragungsverfahren für die TDD-Komponente des Konzeptes ausgewählt. Das TDD-Übertragungsverfahren (Time Division Duplex) bei UMTS umfaßt einen TDMA-Rahmen mit einer Dauer von 10 ms, der in 16 Zeitschlitze mit einer Dauer von 625 µs unterteilt ist, so daß 16 Zeitschlitze pro Rahmen zur Verfügung stehen. Die Zeitschlitze werden aufgeteilt in Zeitschlitze für die Aufwärts- und die Abwärtsverbindung. Der Umschaltpunkt zwischen der Aufwärts- und der Abwärtsverbindung in dem TDD-Rahmen kann verschoben werden, um einen asymmetrischen Verkehr zu unterstützen. Eine genaue Definition der TDD-Komponente des vorgeschlagenen UMTS-Systems ist zu finden ist in dem Vorschlag "Draft ITU system description for the UTRA TDD component", ETSI SMG2 UMTS-L1, Tdoc SMG2 UMTS-L1 194/98 zu finden.

Innerhalb jeden Zeitschlitzes der Länge von 625 µs wird eine zusätzliche Trennung der Benutzersignale durch Spreizcodes bewirkt. Dies bedeutet, daß innerhalb eines Zeitschlitzes mehr als ein Funkblock (burst) einer entsprechenden Länge übertragen werden kann. Diese mehreren Funkblöcke innerhalb des gleichen Zeitschlitzes können sowohl verschiedenen Benutzern als auch teilweise oder insgesamt einem einzigem Benutzer zugeordnet sein. Für die vielfachen Funkblöcke innerhalb des gleichen Zeitschlitzes werden verschiedene Spreizcodes verwendet, um die Unterscheidung zwischen den verschiedenen Funkblöcken zu ermöglichen.

Ein Verfahren zur Vermessung der Übertragungseigenschaften von Funkkanälen ist in US-A- 5583870 beschrichen.

Die folgenden Probleme eines Mobilfunksystems der dritten Generation sind noch nicht zufriedenstellend geklärt:
- Durchführung einer schnellen Vermessung der aktuellen und der benachbarten Basisstation,
- schnelle Übergabe einer Mobilstation an eine andere Basisstation,
- Elimination von Störsignalen, und
- Ortsbestimmung durch die Funkstation (Mobilstation).

Der Erfindung liegt daher die Aufgabe zugrunde, ein Verfahren und eine Vorrichtung zu schaffen, mit der eine schnelle und einfache Vermessung aktueller und benachbarter Basisstationen ermöglicht wird.

Die Aufgabe wird durch die Merkmale der Ansprüche 1 und 12 gelöst. Bevorzugte Ausführungsformen der Erfindung sind Gegenstand der Unteransprüche.

Bei dem erfindungsgemäßen Verfahren zur Vermessung der Übertragungseigenschaften der Funkkanäle eines Funk-Kommunikationssystems mit mehreren Basisstationen und mindestens einer weitere Funkstation, werden zur Übertragung in dem Funk-Kommunikationssystem Zeitrahmen mit einer Zeitschlitzstruktur verwendet und in jedem Zeitschlitz Funkblöcke übertragen. Dabei werden Kanalmeßsequenzen unabhängig von der Datenübertragung ausgesendet. In Abkehr von üblichen Vorgehensweisen in TDMA (time division multiple access) Übertragungssystemen steht nicht die Interferenzminimierung, sondern die schnelle Kanalvermessung mit den davon abhängigen Maßnahmen, wie Ortsbestimmung und Übergaben, im Vordergrund.

Vorzugsweise sind die beteiligten Basisstationen untereinander synchronisiert. Ferner wird die Kanalmeßsequenz ständig mit konstanter Leistung ausgesendet. Senden mehrere Basisstationen gleichzeitig, so liegen sofort Angaben zu mehreren Kanälen vor. Vorzugsweise wird die Kanalmeßsequenz in der Mitte eines Funkblocks ausgesendet, wobei zur Kanalvermessung eine zyklische Korrelation verwendet wird.

Besondere Vorteile ergeben sich unabhängig von den ständigen Ausendungen der Kanalmeßsequenzen, wenn einzelne Basisstationen dieselbe Kanalmeßsequenz verwenden. Wird die für die einzelnen Basisstationen verwendete identische Kanalmeßsequenz mit unterschiedlicher Code-Phase von den verschiedenen Basisstationen gesendet, so ergeben sich zeitlich getrennte Ergebnisse der Kanalmessung in den einzelnen Meßfenstern des Korrelationsergebnisses. Aus den Messungen lassen sich die Kanaleigenschaften der verschiedenen Basisstationen sowie deren Entfernung bestimmen.

Ferner kann die Kanalmeßsequenz eines vorbestimmter Zeitschlitzes des Zeitrahmens eine besondere Kennzeichnung aufweisen. Dabei wird vorzugsweise die gleiche Kanalmeßsequenz wie diejenige der anderen Zeitschlitze verwendet, wobei eine Phasenmodulation der Kanalmeßsequenz des vorbestimmten Zeitschlitzes verwendet wird. Vorzugsweise wird eine 180° Phasenmodulation der Kanalmeßsequenz des vorbestimmten Zeitschlitze von Zeitrahmen zu Zeitrahmen verwendet. Dadurch kann ein vorbestimmter Zeitschlitz des Zeitrahmens eindeutig gekennzeichnet werden, wobei vorzugsweise der 0-te Zeitschlitz (der erste Zeitschlitz eines Rahmens) derart gekennzeichnet wird.

Ferner betrifft die Erfindung ein Funkkommunikationssystem mit mehreren Basisstationen (BS) und mindestens einer Funkstation (MS), die das im vorangegangenen beschriebenen Verfahren verwendet.

Das erfindungsgemäße Verfahren kann sowohl für TDD- als auch für FDD-Systeme verwendet werden.

Die besonderen Vorteile der Erfindung sind darin zu sehen, daß die Kanalmeßsequenzen ständig mit konstanter Leistung ausgesendet werden, unabhängig von dem Inhalt oder der Leistung der Datenabschnitte. Durch das Einführen einer Synchronisation der Zeitschlitze und die Verwendung von Meßsequenzen auf der Basis von zyklischen Korrelationen wird eine Reduktion von Störungen von Nachbarzellen erreicht. Ein single-code und multi-code Betrieb des Funksystems ist möglich.

Eine bevorzugte Ausführungsform der Erfindung wird nachfolgend unter Verweis auf die Zeichnungen erläutert.
Fig. 1 zeigt eine schematische Darstellung eines Funkblocks in einem Zeitschlitz mit einer Kanalmeßsequenz und Datenabschnitten,
Fig. 2 zeigt verschiedene Funkblöcke mit konstanter Leistung der Kanalmeßsequenz,
Fig. 3 zeigt Zellen benachbarter Basisstationen mit typischer Wiederverwendung der Code-Phasen, und
Fig. 4 zeigt das Meßfenster einer Mobilstation mit 7 Abschnitten.

Bei der im folgenden erläuterten bevorzugten Ausführungsform der Erfindung wird von einem Funksystem mit Zeitschlitzstruktur und zum besseren Verständnis von einer zeitlichen Synchronisation der benachbarter Basisstationen ausgegangen. Für die Realisierung der zeitlichen Synchronisation sind verschiedene Verfahren bekannt. Allerdings ist die Synchronisation keine Voraussetzung für die Funktionsfähigkeit des Verfahrens. Sind die Laufzeiten zwischen Basisstationen und Mobilstationen klein gegenüber der Dauer eines Zeitschlitzes dann sind die Zeitschlitze auch bei den Mobilstationen synchronisiert. Eine ideale Synchronisation der Basisstationen vorausgesetzt, ergeben sich lediglich Verschiebungen aus Entfernungsdifferenzen zwischen der jeweiligen Mobilstationen und den verschiedenen Basisstationen. Derartige Verschiebungen nehmen mit dem Abstand der Basisstationen zu.

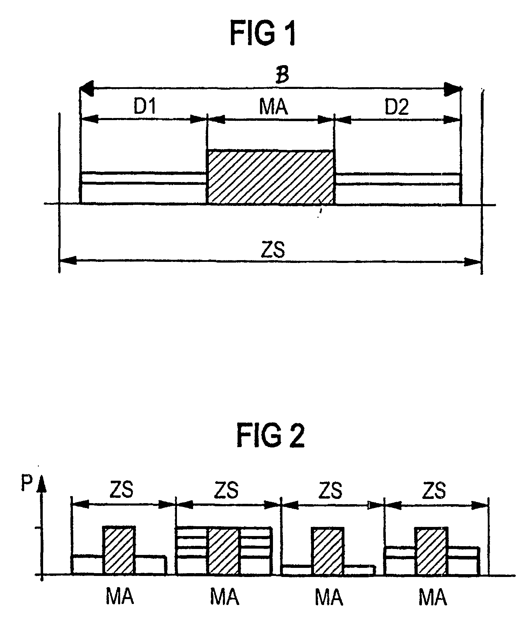

Fig. 1 zeigt die schematische Darstellung eines Funkblocks B in einem Zeitschlitz ZS. In jedem derartigen Zeitschlitz ZS werden Funkblöcke B übertragen, welche zeitlich etwas kürzer sind als die Zeitschlitze ZS selbst. Die sich daraus ergebende Schutzzeit soll Störungen durch unterschiedliche Laufzeiten sowie durch Synchronisationsfehler vermeiden. Für die Vermessung der Übertragungseigenschaften der Funkkanäle wird während der Funkblöcke B jeweils eine Kanalmeßsequenz ausgesandt. Dies erfolgt bevorzugt in der Mitte eines jeden Funkblocks (schwarz dargestellt, sog. Midamble MA). Als ein zahlenmäßiges Beispiel sei eine Zeitrahmendauer von 10 ms angenommen. Dieser Zeitrahmen wird in 16 Zeitschlitze à 625 µs unterteilt. Ein Funkblock besteht z.B. aus zwei Datenblöcken D1 und D2 von je 200 µs Dauer und einer Kanalmeßsequenz MA (Midamble) von 200 µs Dauer in der Mitte zwischen den beiden Datenblöcken D1, D2. Dies ergibt eine gesamte Funkblockdauer von 600 µs, die verbleibenden 25 µs in jedem Zeitschlitz werden als Schutzzeit verwendet. In den Datenblöcken D1, D2 können Informationen an eine oder mehrere Funkstationen MS übertragen werden. Dabei können neben einem Übertragungskanal auch mehrere Übertragungskanäle gleichzeitig aktiv sein, welche durch unterschiedliche Codes voneinander getrennt sind. Eine bevorzugte Ausführungsform für unterschiedliche Codes beruhen auf einer Walsh-Hadamard-Transformation.

Nimmt man weiter an, daß zur Kanalvermessung eine zyklische Korrelation verwendet wird, dann können die einzelnen Basisstationen dieselbe Kanalmeßsequenz verwenden, jedoch wird diese Kanalmeßsequenz mit unterschiedlicher Code-Phase von den verschiedenen Basisstationen gesendet. Eine zyklische Korrelation in den Empfängern der Mobilstationen MS ergibt dann zeitlich getrennte Ergebnisse der Kanalmessung in Bezug zu den verschiedenen Basisstationen in den einzelnen Meßfenstern des Korrelationsergebnisses. Mit den obigen Zahlenwerten ergeben sich z.B. bei 7 verschiedenen äquidistanten Code-Phasen Meßfenster von jeweils 25 µs. Solange die Summe aus delay spread, Synchronisationsunsicherheit und Entfernungsunterschieden zu den verschiedenen Basisstationen kleiner als 25 µs bleibt, ergeben sich keine gegenseitigen Störungen der empfangenen Kanalmeßsequenzen von den verschiedenen Basisstationen. Das Kanalmeßverfahren ist also im Bezug auf benachbarte Basisstationen orthogonal, obwohl die Meßsequenzen gleichzeitig ausgesandt und in den Mobilstationen auch gleichzeitig empfangen werden. Mit dem obigen Zahlenbeispiel stehen z.B. 15 µs für die Messung des delay spreads (Signalstreuung) und·10·µs für Synchronisationsunsicherheiten und Entfernungsunterschiede zur Verfügung oder 5 µs für die Messung des delay spreads und 20 µs für Synchronisationsunsicherheiten und Laufzeitdifferenzen, ohne daß gegenseitige Störungen bei der Kanalmessung auftreten.

Wie bereits ausgeführt, sind auf Grund der Synchronisation bei nicht zu großen Abständen der Basisstationen die Kanalmeßsequenzen auf der Basis einer zyklischen Korrelation orthogonal. Alle Basisstationen können daher die Kanalmeßsequenzen ständig und mit einer konstanten Leistung aussenden. Die Datenblöcke D1, D2 selbst können mit einer anderen Leistung gesendet werden, oder überhaupt nicht vorhanden sein, was in Fig. 2 dargestellt ist, wo in vertikaler Richtung die Leistung P der Datenblöcke D1, D2 und der Midamble MA für verschiedenen Leistungen der Datenblöcke D1, D2 aufgetragen ist. Die Leistung der Kanalmeßsequenz in der Midamble MA ist immer konstant. Dies gilt z.B. für Zeitschlitze, in denen die jeweilige Basisstation momentan keine Verbindung zu einer Funkstation hat. Mit der Synchronisation der Zeitschlitze und verschiedenen Code-Phasen liefern die Kanalmessungen durch die Mobilstationen Meßwerte für die Übertragungseigenschaften und Dämpfungen zu den verschiedenen Basisstationen, wobei diese Messungen nicht durch die Datenübertragung gestört werden

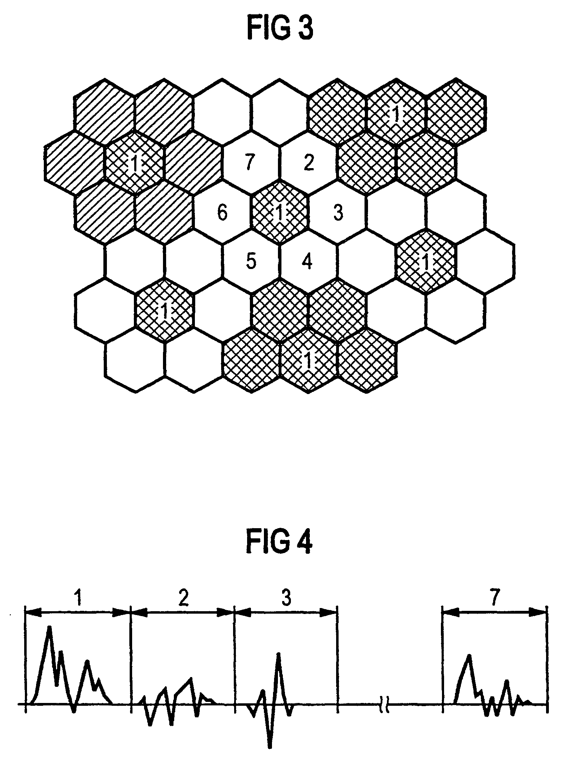

Mit dem obigen Zahlenbeispiel verwenden benachbarte Basisstationen eine Staffelung der Code-Phasen von 25 µs. Eine Wiederholung der Code-Phase erfolgt in dem obigen Beispiel nach 7 Basisstationen. Man hat damit für die Kanalvermessung durch die Mobilstationen ein "re-use cluster" von 7 für die Wiederverwendung gleicher Code-Phasen geschaffen, was in Fig. 3 dargestellt ist. Eine Mobilstation kann, mit dem obigen Zahlenbeispiel, die Übertragungseigenschaften von bis zu 7 Basisstationen durch die Auswertung der empfangenen Kanalmeßsequenzen eines einzigen Zeitschlitzes vermessen, was durch die schematisch dargestellten Meßfenster der Fig. 4 dargestellt ist. Es können grundsätzlich auch andere "re-use cluster" als 7 zum Einsatz kommen, z.B. 3, 4, 6, 7, 9, usw.. Je größer das "re-use cluster" gewählt wird, um so geringer werden die möglichen Störungen durch andere Basisstationen der gleichen Code-Phase aus Überreichweiten.

Als weiterer Vorteil, neben der schnellen Vermessung der Basisstationen, ist eine schnelle Übergabe einer Funkstation von einer Basisstation an eine andere Basisstation möglich, falls die Zeitschlitze synchronisiert sind. Eine Funkstation kann in einem Zeitschlitz gleichzeitig eine größere Anzahl von Nachbar-Basisstationen vermessen (in dem obigen Beispiel bis zu sechs Nachbar-Basisstationen durch Auswerten der Kanalmessung in einem einzigen Zeitschlitz ZS. Ein Übergeben einer Funkstation von einer Basisstation an eine andere Basisstation kann daher von einem Zeitrahmen zu einem anderen Zeitrahmen erfolgen, entsprechende Fähigkeiten der festen Basisstationen und des festen Netzwerkes vorausgesetzt. Eine unterbrechungsfreie Übergabe an eine andere Basisstation ist damit möglich. Das Verfahren erlaubt sehr hohe Reaktionsgeschwindigkeiten auf Veränderungen der Funkumgebung, beispielsweise auf Grund von Geschwindigkeiten der Funkstationen ("single look" MAHO).

Das ständige Aussenden der Kanalmeßsequenzen in dem vorgeschlagenen Funksystem ermöglicht den Funkstationen im (passiven) Empfangsbetrieb während jeder "Midamble" die Übertragungseigenschaften zu den verschiedenen Basisstationen zu vermessen und darüber hinaus aus den Laufzeitdifferenzen die Entfernungsdifferenzen zu den verschiedenen Basisstationen bestimmen zu können. Dies erlaubt eine passive Betriebsweise zur Ortsbestimmung der Funkstationen, ohne eigenes Ausstrahlen von Sendesignalen durch die Funkstationen und damit ohne Belastung der Übertragungskapazität des Funksystems. Zur Ortsbestimmung sind prinzipiell die Entfernungsdifferenzen zu 3 Basisstationen ausreichend. Mit der Möglichkeit der gleichzeitigen Vermessung von bis zu 7 Basisstationen in dem hier vorgestellten Beispiel ist im allgemeinen eine Erhöhung der Meßgenauigkeit möglich wegen der Redundanz der vorliegenden Meßwerte der Entfernungsdifferenzen. In Fig. 4 wären z.B. die Entfernungsdifferenzen für das mittlere Cluster der Fig. 3 von bis zu 7 Basisstationen möglich. Empfangene Kanalmeßsequenzen aus Überreichweiten beeinträchtigen die Meßgenauigkeit der Ortsbestimmung nicht, da derartige Signale zeitlich später eintreffen als die Vorderflanken der Kanalimpulsantworten von den zu vermessenden Basisstationen, welche zur Entfernungsdifferenzmessung wesentlich sind. Die Genauigkeit der Ortsbestimmung ist abhängig von der Synchronisiergenauigkeit der Basisstationen und der Auflösung der Kanalmessung und damit der Bandbreite des Funksystems. Über einen "broadcast channel" können die erforderlichen Informationen zur Ortsbestimmung, wie Position der Basisstationen und der Nachbar-Basisstationen zyklisch ausgestrahlt werden. Da die Ortsbestimmung nur die Auswertung empfangener Signale erfordert, können beliebig viele Funkstationen ihren aktuellen Standort bestimmen. Diese Eigenschaft ist z.B. für Telematik-Anwendungen wichtig.

In einer bevorzugten Weiterführung wird der Zeitschlitz 0 des Zeitrahmens besonders gekennzeichnet. Vorzugsweise sollte jedoch die gleiche Kanalmeßsequenz wie in den anderen Zeitschlitzen verwendet werden. Es bietet sich deshalb eine Phasenmodulation der Kanalmeßsequenzen im Zeitschlitz 0 an. Im einfachsten Fell kann eine Phasenmodulation von 180° von Zeitrahmen zu Zeitrahmen verwendet werden. Bei einer ruhenden Mobilstation ergibt sich also ein im Vorzeichen alternierendes Ergebnis für diesen Zeitschlitz, welches einfach von den Ergebnissen der anderen Zeitschutze unterschieden werden kann. Bei bewegten Funkstationen ergeben sich Verschiebungen durch den auftretenden Dopplereffekt, jedoch ist der Zeitschlitz 0 gegenüber den anderen Zeitschlitzen eindeutig identifizierbar.

Das erläuterte Verfahren ist nicht auf TDD-Funksysteme beschränkt, sondern kann auch in FDD-Systemen verwendet werden, in denen ebenfalls Zeitschlitze (slots) eingerichtet sind. Ferner kann das erfindungsgemäße System mit unterschiedlichen Frequenzwiederholungsfaktoren (frequency reuse cluster) betrieben werden. Bevorzugte Ausführungsformen sind Frequenzwiederholungsfaktoren von 1, 3 und 4.

## Patentansprüche

1. Verfahren zur Vermessung der Übertragungseigenschaften der Funkkanäle eines Funk-Kommunikationssystems mit mehreren Basisstationen (BS) und mindestens einer weiteren Funkstation (MS), wobei das Funk-Kommunikationssystem eine Zeitschlitzstruktur eines Zeitrahmens aufweist,
bei dem eine der Basistationen Daten (D1, D2) in Form von Funkblöcken zu einer der weiteren Funkstationen überträgt, wobei jeder Funkblock außerdem eine bestimmte Kanalmeßsequenz (MA) aufweist,
**dadurch gekennzeichnet, daß**
die Basisstation die bestimmte Kanalmeßsequenz (MA) auch in wenigstens einem Zeitschlitz (ZS) aussendet, in dem keine Daten von der Basisstation zu einer der weiteren Funkstationen übertragen werden.

2. Verfahren nach Anspruch 1,
**dadurch gekennzeichnet,**
**daß** die Kanalmeßsequenz mit konstanter Leistung und/oder von mehreren Basisstationen (BS) gleichzeitig ausgesendet wird.

3. Verfahren nach einem der vorangegangenen Ansprüche,
**dadurch gekennzeichnet,**
**daß** die Kanalmeßsequenz in der Mitte eines Funkblocks (B) ausgesendet wird.

4. Verfahren nach einem der vorangegangenen Ansprüche,
**dadurch gekennzeichnet,**
**daß** die Basisstationen (1,..., 7) synchronisiert sind.

5. Verfahren nach Anspruch 4,
**dadurch gekennzeichnet,**
**daß** zur Kanalvermessung eine zyklische Korrelation verwendet wird.

6. Verfahren nach Anspruch 5,
**dadurch gekennzeichnet,**
**daß** die einzelnen Basisstationen (1,...,7) dieselbe Kanalmeßsequenz verwenden.

7. Verfahren nach Anspruch 6,
**dadurch gekennzeichnet,**
**daß** die Kanalmeßsequenz mit unterschiedlicher Code-Phase von den verschiedenen Basisstationen (1, ..., 7) gesendet wird.

8. Verfahren nach einem der vorangegangenen Ansprüche,
**dadurch gekennzeichnet,**
**daß** die Kanalmeßsequenz eines vorbestimmten Zeitschlitzes (ZS) des Zeitrahmens eine besondere Kennzeichnung aufweist.

9. Verfahren nach Anspruch 8,
**dadurch gekennzeichnet,**
**daß** die gleiche Kanalmeßsequenz wie diejenige der anderen Zeitschlitze (ZS) verwendet wird, wobei eine Phasenmodulation der Kanalmeßsequenz des vorbestimmten Zeitschlitzes (ZS) verwendet wird.

10. Verfahren nach Anspruch 9,
**dadurch gekennzeichnet,**
**daß** eine 180° Phasenmodulation der Kanalmeßsequenz des vorbestimmten Zeitschlitzes (ZS) von Zeitrahmen zu Zeitrahmen verwendet wird.

11. Verfahren nach einem der Ansprüche 8-10,
**dadurch gekennzeichnet,**
**daß** der vorbestimmte Zeitschlitz (ZS) der 0-te Zeitschlitz ist.

12. Funkkommunikationssystem mit mehreren Basisstationen (BS) und mindestens einer Funkstation (MS) welches eingerichtet ist zur Durchführung des Verfahrens nach einem der Ansprüche 1 bis 11.

13. Vorrichtung nach Anspruch 12, wobei es sich um ein TDD-Funkkommunikationssystem handelt.

14. Vorrichtung nach Anspruch 12, wobei es sich um ein FDD-Funkkommunikationssystem handelt.

## Claims

1. Method for measurement of the transmission characteristics of the radio channels in a radio communications system having a number of base stations (BS) and at least one further radio station (MS), with the radio communications system having a timeslot structure in a time frame,
in which one of the base stations transmits data (D1, D2) in the form of bursts to one of the other radio stations, with each burst also having a specific channel measurement sequence (MA),
**characterized**
**in that** the base station transmits the specific channel measurement sequence (MA) even in at least one timeslot (ZS) in which no data are transmitted from the base station to one of the other radio stations.

2. Method according to Claim 1,
**characterized**
**in that** the channel measurement sequence is transmitted at a constant power level and/or by number of base stations (BS) at the same time.

3. Method according to one of the preceding claims,
**characterized**
**in that** the channel measurement sequence is transmitted in the middle of a burst (B).

4. Method according to one of the preceding claims,
**characterized**
**in that** the base stations (1,...,7) are synchronized.

5. Method according to Claim 4,
**characterized**
**in that** cyclic correlation is used for channel measurement.

6. Method according to Claim 5,
**characterized**
**in that** the individual base stations (1,...,7) use the same channel measurement sequence.

7. Method according to Claim 6,
**characterized**
**in that** the channel measurement sequence is transmitted with a different code phase by the various base stations (1, ..., 7).

8. Method according to one of the preceding claims,
**characterized**
**in that** the channel measurement sequence in a predetermined timeslot (ZS) in the time frame has a special identifier.

9. Method according to Claim 8,
**characterized**
**in that** the same channel measurement sequence as that in the other timeslots (ZS) is used, with phase modulation being used in the channel measurement sequence in the predetermined timeslot (ZS).

10. Method according to Claim 9,
**characterized**
**in that** 180° phase modulation of the channel measurement sequence in the predetermined timeslot (ZS) is used from one time frame to the next.

11. Method according to one of Claims 8-10,
**characterized**
**in that** the predetermined timeslot (ZS) is the 0-th timeslot.

12. Radio communications system having a number of base stations (BS) and at least one radio station (MS), which is designed to carry out the method according to one of Claims 1 to 11.

13. Apparatus according to Claim 12, with said apparatus being a TDD radio communication system.

14. Apparatus according to Claim 12, with said apparatus being an FDD radio communication system.

## Revendications

1. Procédé pour mesurer les caractéristiques de transmission des voies radioélectriques d'un système de communication radio avec plusieurs stations de base (BS) et au moins une station radio supplémentaire (MS), le système de communication radio comprenant une structure de créneau temporel d'une trame de temps, dans lequel l'une des stations de base transmet des données (D1, D2) sous forme de blocs radio à l'une des autres stations radio, chaque bloc radio comprenant en outre une séquence de mesure de voies déterminée (MA), **caractérisé en ce que** la station de base émet la séquence de mesure de voies déterminée (MA) également dans au moins un créneau temporel (ZS), dans lequel aucune donnée n'est transmise de la station de base à l'une des autres stations radio.

2. Procédé selon la revendication 1, **caractérisé en ce que** la séquence de mesure de voies est émise simultanément à puissance constante et/ou par plusieurs stations de base (BS).

3. Procédé selon l'une des revendications précédentes, **caractérisé en ce que** la séquence de mesure de voies est émise au centre d'un bloc radio (B).

4. Procédé selon l'une des revendications précédentes, **caractérisé en ce que** les stations de base (1, ..., 7) sont synchronisées.

5. Procédé selon la revendication 4, **caractérisé en ce qu'**une corrélation cyclique est utilisée pour mesurer les voies.

6. Procédé selon la revendication 5, **caractérisé en ce que** les stations de base individuelles (1, ..., 7) utilisent la même séquence de mesure de voies.

7. Procédé selon la revendication 6, **caractérisé en ce que** la séquence de mesure de voies est émise par les différentes stations de base (1, ..., 7) avec une phase de code différente.

8. Procédé selon l'une des revendications précédentes, **caractérisé en ce que** la séquence de mesure de voies d'un créneau temporel prédéterminé (ZS) de la trame de temps présente une signalisation particulière.

9. Procédé selon la revendication 8, **caractérisé en ce que** la même séquence de mesure de voies que celle des autres créneaux temporels (ZS) est utilisée, une modulation de phase de la séquence de mesure de voies du créneau temporel prédéterminé (ZS) étant utilisée.

10. Procédé selon la revendication 9, **caractérisé en ce qu'**une modulation de phase de 180° de la séquence de mesure de voies du créneau temporel prédéterminé (ZS) est utilisée de trame de temps à trame de temps.

11. Procédé selon l'une des revendications 8 à 10, **caractérisé en ce que** le créneau temporel prédéterminé (ZS) est le 0ème créneau temporel.

12. Système de communication radio avec plusieurs stations de base (BS) et au moins une station radio (MS), laquelle est configurée pour la mise en oeuvre du procédé selon l'une des revendications 1 à 11.

13. Dispositif selon la revendication 12, le système de communication radio étant un système TDD.

14. Dispositif selon la revendication 12, le système de communication radio étant un système FDD.
